# EUROPEAN PATENT APPLICATION

(11) **EP 2 326 126 A1**
(43) Date of publication of application: **25.05.2011**
(21) Application number: 09176908.3
(22) Date of filing: 24.11.2009
(51) Int. Cl.: H04W 40/36

(54) **Communications system and method for routing an incoming call**

(71) Applicant: Mondial Telecom, 1170 Watermael-Boitsfort (BE)
(72) Inventor: The designation of the inventor has not yet been filed
(74) Representative: Luys, Marie-José A.H.

(57) **Abstract**

The present invention relates to a communications system comprising a PSTN 1 comprising an STP 7, and an IP network 2 comprising a media gateway 13 and a media gateway controller 15 connected to said media gateway 13 and having a point code. The STP 7 and the media gateway controller 15 are connected to each other via a signalling link, in particular an SS7 ISUP signalling channel 16. The present invention also relates to a method for routing an incoming call in said PSTN 1 towards a dual mode terminal 3 connectable to both said PSTN 1 and IP network 3.

## Description

### TECHNICAL FIELD

The present invention relates to a communications system comprising a public switched telephone (PSTN) network and an Internet Protocol (IP) network, as well as to a method for routing an incoming call in a PSTN network towards a dual mode terminal independently connectable to both said PSTN and IP networks.

### BACKGROUND OF THE INVENTION

Voice communications have recently known rapid advances in two parallel fields. The first field is that of cellular telephony, which has allowed an increased mobility of telephony users. A second, more recent field is that of Voice-over-Internet-Protocol (VoIP) communications, wherein voice communications are routed over IP networks.

While both cellular telephony and VolP communications have provided undeniable advantages, their parallel development has led also to some drawbacks for a user wishing to exploit both.

Increasingly, dual mode terminals, independently connectable both to PSTNs and to IP networks are being proposed. In particular, dual mode terminals are being proposed which comprise both a mobile telephony transceiver for wirelessly connecting the dual mode terminal to a cellular PSTN, such as, for example, a GSM network or a UMTS network, and a wireless Local Area Network (LAN) transceiver for connecting to an IP network over a wireless LAN. The existence of such dual mode terminals, coupled to the increasing popularity of VoIP, has led to the emergence of the concept of Fixed-Mobile Convergence (FMC), proposing a single communications system encompassing both a cellular PSTN and an IP network, so that the dual mode terminal can maintain communications with this communication system using either one of its connections.

International Patent Application WO 00/79814 A1 discloses one such communications system comprising both a PSTN and an IP network. In this communications system, a first one of the networks comprises a home location register in which the dual use terminal is registered, and the second network comprises a serving location register. When the dual use terminal connects to this second network, the serving location register in the second network sends updated location information to the first network. The more obvious drawback of this system is that location data must be exchanged between both networks each time that the dual mode terminal connects and disconnects to the second network, even when no call effectively takes place. Moreover, this prior art document does not provide for the handover of an ongoing call when the dual mode terminal goes from one network to the other.

US Patent Application US 2005/0096024 A1 discloses a similar communications system in which, when the dual mode terminal connects to the IP network, the IP network has to transmit its IP address to a location register in the PSTN. It therefore presents the same drawbacks as WO 00/79814 A1.

US Patent Application US 2009/0131045 A1 discloses another communications system comprising a PSTN and an IP network. In this system, incoming calls directed to the dual mode terminal are always forcedly routed over the IP network. If the dual mode terminal is not connected to the IP network at the time, they are routed back from the IP network to the PSTN. While this system no longer requires to send a location update from the IP network to the PSTN each time that the dual mode terminal connects to or disconnects from the IP network, it also requires considerable bandwidth between the two networks, especially when the dual mode terminal is not connected to the IP network, as in this case the call must be transmitted from the PSTN to the IP network and then back to the PSTN. This document also fails to address the problem of call handover.

A number of publications have addressed the problem of handing over an ongoing call when a dual mode terminal goes from an IP network to a PSTN. Most notably, this has been addressed by the 3^{rd} Generation Partnership Project (3GPP™) in its Technical Specification 3GPP TS 23.206. However, to perform call handover with voice call continuity, this technical specification also requires additional resources in the form of an IP Multimedia Subsystem (IMS).

US Patent Application US 2006/0198360 A1 discloses a communications system and a method for handing over a call when a dual mode terminal goes from an IP network to a PSTN. In this communication system, the IP network comprises a call manager which initiates a continuity call to the dual use terminal over the PSTN if the connection over the IP network is impaired. This however also requires additional resources in the IP network in the form of an apparatus comprising said call manager, a quality monitor, a threshold selector and a target selector.

European patent application EP 2 018 014 A1 discloses a similar communications system and method in which a continuity call is initiated by the IP network if the connection over the IP network is impaired.

US Patent Application US 2006/0121902 A1 also discloses a communications system and a method for handing over a call when a dual mode terminal goes from an IP network to a PSTN. In this method, the continuity call is initiated by the dual mode terminal, rather than by a call manager in the IP network. However, this document does not disclose how the dual mode terminal manages connection to various PSTNs, and in particular the issue of roaming out of the IP network to a PSTN other than a "home" network of the dual mode terminal.

US Patent Application US 2008/0273505 A1 also discloses a communications system and a method for handing over a call when a dual mode terminal goes from an IP network to a PSTN. However, this document does not disclose how the dual mode terminal manages connection to various PSTNs, and in particular the issue of roaming out of the IP network to a PSTN other than the "home" network of the dual mode terminal.

### SUMMARY OF THE INVENTION

An object of the present invention is to provide a communications system suitable for providing call connectivity to a dual mode terminal over both a PSTN and an IP network with comparatively reduced bandwidth between those two networks.

For this purpose, at least an embodiment of the present invention comprises a communications system comprising a PSTN with a signal transfer point, an Internet Protocol network with a media gateway (MG) connected to a media gateway controller (MGC), and a dual mode terminal connectable to both said PSTN and said IP network. This media gateway controller has a signalling point code, in particular a national signalling point code (NSPC), and is connected to said signal transfer point in the PSTN over at least one signalling link, in particular an SS7 ISDN User Part (ISUP) link.

In communications systems, Common Channel Signalling is the transmission of signalling information, i.e. control information related to the routing of the communications, through a separate channel from the communications themselves. For example, in a PSTN, one channel of a communications trunk is typically used for the sole purpose of carrying signalling for establishment and clear down of calls. In most cases, a single 64kbit/s channel is sufficient to handle the call setup and call clear-down traffic for numerous voice and data channels.

SS7 (Signalling System #7) is the most commonly used set of telephony signalling protocols. The basic international SS7 protocol is defined by ITU-T in its Q.700 series of recommendations. National SS7 protocols are developments of this basic international protocol. Within SS7, ISUP is the part used to set up calls.

In the field of communications, a signal transfer point (STP) is understood as a router that relays SS7 messages between signalling end-points (SEPs) and other signalling transfer points (STPs), in order to route them to the appropriate signalling link. SEPs and STPs are identified by unique point codes.

By allocating a point code to the MGC, and connecting it to an STP in the PSTN over a signalling link, which may take the take the form of a dedicated signalling channel in a communications trunk such as an E1 or T1 trunk, and in particular an SS7 ISUP channel, it becomes possible for the PSTN to test the availability of a dual mode terminal over the IP network before actually handing over the call to the IP network, and without having to update the home location register (HLR) of the PSTN each time that the dual mode terminal connects to or disconnects from this IP network. The required bandwidth of the link between the PSTN and the IP network is thus reduced, and fewer modifications of the PSTN are required, resulting in a less complex, more reliable system.

Advantageously, said IP network may further comprises a routing server connected to said MGC. The routing server routes calls within the IP network, and can be queried by the MGC to determine whether the dual mode terminal is connected to the IP network or not. In a preferred embodiment, said routing server may be a Session Initiation Protocol (SIP) server, but other alternatives may be considered by the skilled person as a matter of course.

The dual mode terminal may further comprise a mobile telephony transceiver for wirelessly connecting said dual mode terminal to said PSTN over at least one public land mobile network (PLMN) base station connected to said PSTN. Said mobile telephony transceiver may be, for example, a GSM transceiver, a CDMA transceiver, a PDC transceiver, a PDMA transceiver, an UMTS transceiver, a Tetra transceiver or a CDMA2000 transceiver. The dual mode terminal can thus be mobile.

Said dual mode terminal may also comprise a wireless transceiver for wirelessly connecting said dual mode terminal to said IP network. Said wireless transceiver may be, for example, a wireless Local Area Network (LAN) transceiver according to an IEEE 802.11 standard (also known as WiFi™). The dual mode terminal may thus be conveniently used as a cordless terminal over an area covered by a wireless LAN. However, the wireless transceiver may also be any other type of transceiver suitable for wirelessly connecting to an IP network, such as for instance a WiMAX™ transceiver, or even the mobile telephony transceiver itself when it is also suitable for connection to an IP network.

Advantageously, said PSTN may further comprise a mobile switching center (MSC) for routing the calls in the PSTN.

Said PSTN may further comprise a service control point (SCP), said MSC is configured to direct an incoming call directed to said dual mode terminal to be handled by said SCP, and said SCP is configured to route the call towards said first STP. Incoming calls are thus forcedly routed towards this signalling gateway to the IP network.

Said dual mode terminal may have a unique identifier, and said PSTN further comprise a home location register (HLR) listing said identifier, and connected to said MSC, and said MSC is configured to determine whether an incoming call is directed to said dual mode terminal by checking in said HLR. A mobile virtual network operator (MVNO) using said MSC can thus provide all mobile services to the dual mode terminal.

Another object of the present invention is to provide a communications system suitable for providing call connectivity to a dual mode terminal over both a PSTN and an IP network, wherein call continuity can be ensured even when the dual mode terminal changes from an IP network connection to a PSTN connection during an ongoing call.

Said IP network may further comprise a voice call continuity (VCC) server connected to said MG, so as to provide call continuity even when the dual mode terminal changes from one type of connection to another.

Said dual mode terminal may be configured to call the VCC server over a PSTN using a VCC service number if an existing connection to said IP network is impaired. The continuity call is thus initiated by the dual mode terminal itself, further reducing the resources needed in the IP network.

In particular, said dual mode terminal may be configured to select said VCC service number from a table of available telephone numbers depending on location of the dual mode terminal. In particular, different numbers may be chosen depending on whether the dual mode terminal is directly connected to a home PSTN, or roaming on a third-party PSTN. This may be determined, for example, on the basis of a Mobile Country Code and/or a Mobile Network Code of a PLMN base station over which said dual mode terminal is wirelessly connected to said PSTN, or on the basis of a global positioning signal. The continuity may thus be sent over the most cost-effective route, the most reliable route, and/or the route offering the best service.

Said VCC server may be configured to check, upon reception of a continuity call from said dual mode terminal using said VCC service number, whether there is an ongoing call routed towards said dual mode terminal over said IP network, and in that case to swap an IP network leg of the ongoing call with at least one leg of the continuity call, to provide call continuity over the PSTN connection.

Another object of the present invention is to provide a method for routing an incoming call in a PSTN towards a dual mode terminal connectable to both said PSTN and an IP network.

In at least an embodiment of the invention, this method comprises the steps of:
- sending a call connection request from an STP in said PSTN to a MGC with a signalling point code in said IP network;
- determining whether said dual mode terminal is connected to said IP network;
- if the dual mode terminal is connected to the IP network, routing the call to the dual mode terminal over said IP network; and
- if the dual mode terminal is not connected to the IP network or does not reply, answering said connection request from the STP to the MGC with a release message from the MGC to the STP and routing the call to the dual mode terminal over said PSTN.

Said connection request and said release message may be in the form of SS7 ISUP messages.

This method may also comprise a step of sending a query, from said MGC to a routing server in said IP network, for determining whether said dual mode terminal is connected to said IP network.

If, after the incoming call is routed towards the dual mode terminal over the IP network, the connection of the dual mode terminal to the IP computer network is impaired, the dual mode terminal may call a VCC server in said IP network over a PSTN using a VCC service number.

When the VCC server receives a call originating from the dual mode terminal using a VCC service number, if there is an ongoing call routed over said IP network towards said dual mode terminal, the ongoing call may be rerouted over the PSTN, preferably by swapping an IP network leg of the ongoing call with at least one leg of the call originating from the dual mode terminal towards the Media Gateway, as instructed via signalling information emitted by the VCC Server.

### BRIEF DESCRIPTION OF THE DRAWINGS

These and other objects of the present invention will become more readily apparent upon reading the following detailed description and upon reference to the attached drawings in which:
Fig. 1 shows an embodiment of a communications system according to the invention;
Figs. 2a, 2b and 2c show how, in the communications system of Fig. 1, an incoming call is routed over the IP network to the dual mode terminal is handled if the dual mode terminal is connected to the IP network;
Figs. 3a, 3b and 3c show how, in the communications system of Fig. 1, an incoming call is routed over the PSTN to the dual mode terminal if the dual mode terminal is not connected to the IP network or is connected but does not reply;
Figs. 4a and 4b show how, in the communications system of Fig. 1, an ongoing call is rerouted over the PSTN if the connection of the dual mode terminal to the IP network is impaired.

### DETAILED DESCRIPTION OF THE INVENTION

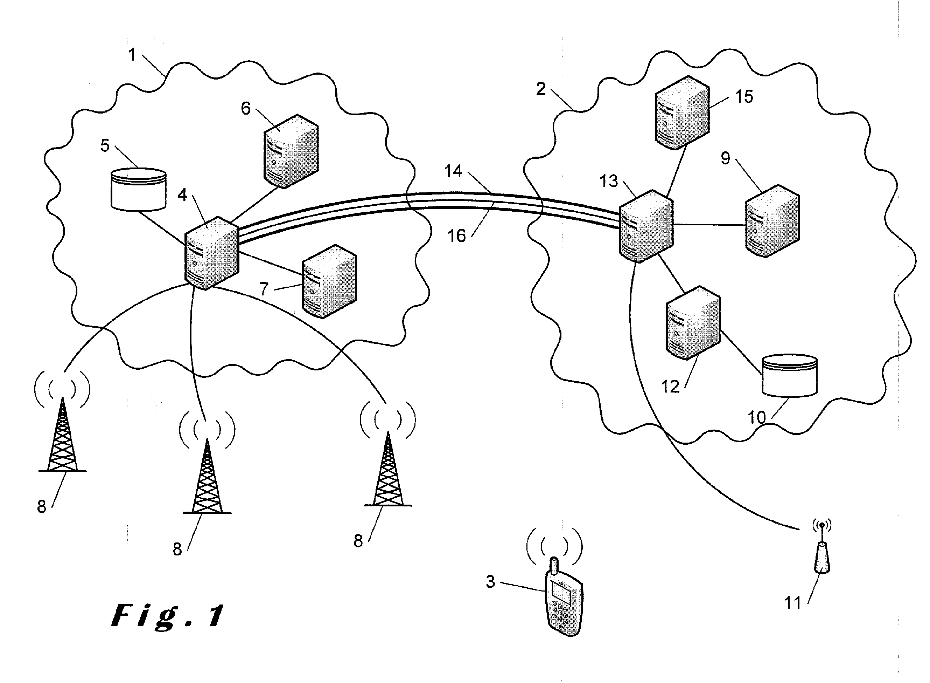

A particular embodiment of a communications system according to the invention is illustrated in Fig. 1. This communications system comprises a PSTN 1, an IP network 2, such as the Internet, and a dual mode terminal 3.

The PSTN 1 is a PLMN comprising an MSC 4 connected to an HLR 5, an SCP 6, and an STP 7. Although in the illustrated embodiment a single one of each of these components is illustrated, they may be doubled for redundancy, as customary in this technical domain. The PSTN 1 also comprises base stations 8, each one providing coverage to a mobile telephony cell.

The IP network 2 comprises a routing server 9, which in this particular embodiment is an SIP server, and an MG 13 connected with a MGC 15. This MGC 15 is identified with a signalling point code, so that it can exchange call signalling information via the STP 7 using SS7 ISUP signalling. The MG 13 is connected, over said IP network 2, with a wireless LAN router 11 providing coverage to a wireless LAN, and with a VCC server 12. The VCC server 12 has a Call in Progress Table (CPT) 10. Just like the STP 7, the MG 13 and MGC 15 be doubled for redundancy.

In this embodiment, the MSC 4 and MG 13 are connected over an E1 or T1 trunk 14. Within this trunk 14, an SS7 ISUP signalling channel 16 provides signalling communication between the STP 7 and the MGC 15. The dual mode terminal 3 comprises both a mobile telephony transceiver, such as, for example a GSM transceiver, a CDMA transceiver, a PDC transceiver, a PDMA transceiver, an UMTS transceiver, or a CDMA2000 transceiver, and, in this embodiment, a wireless LAN transceiver, such as an IEEE 802.11 (WiFi™) transceiver, allowing the dual mode terminal to independently connect to both the PSTN 1 and the IP network 2. The dual mode terminal 3 further comprises an SIP client, which can be implemented by a generic programmable data processor running a specific computer program. The dual mode terminal 3 has a unique identifier, which is stored in the HLR 5 as belonging to a supplier of an FMC service.

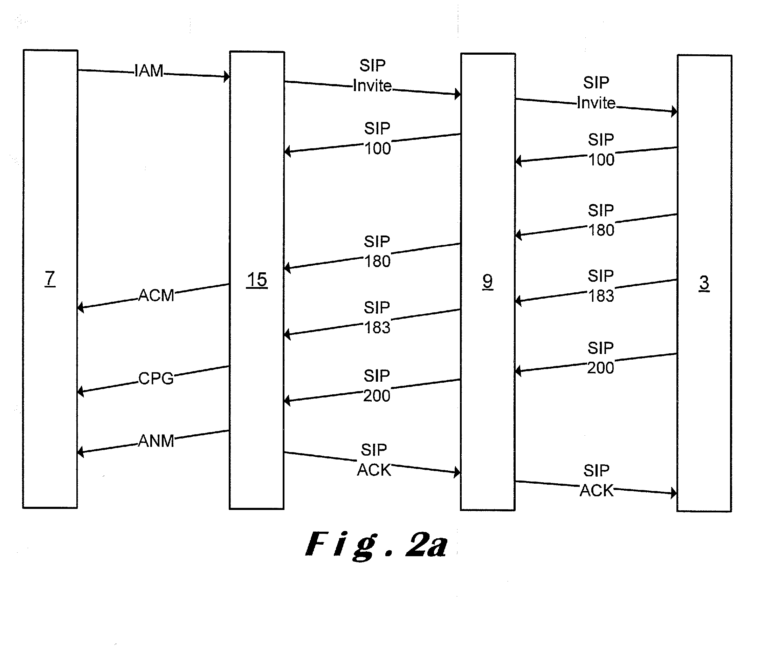

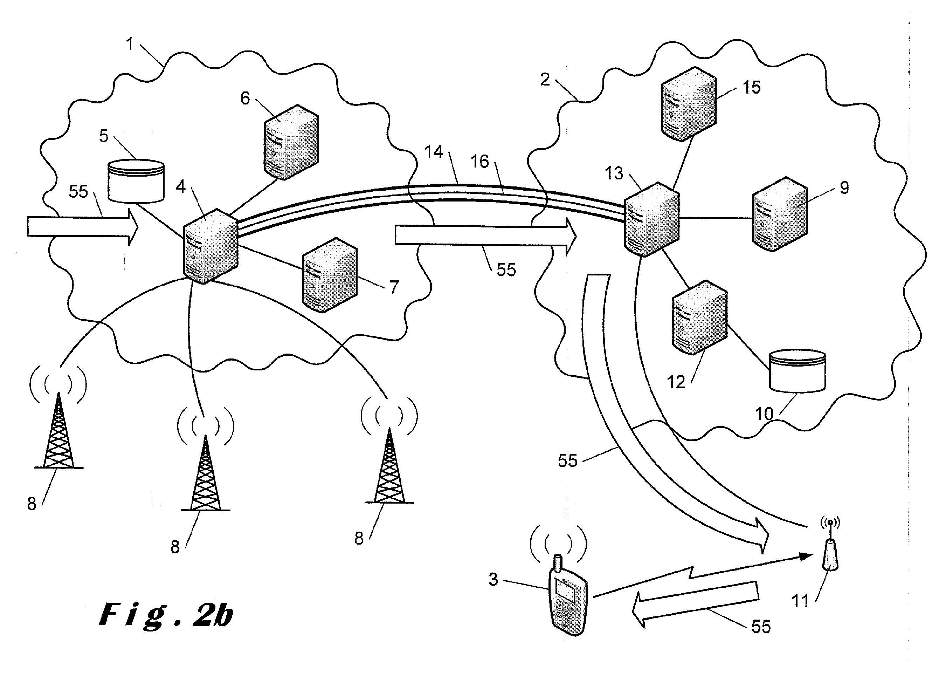

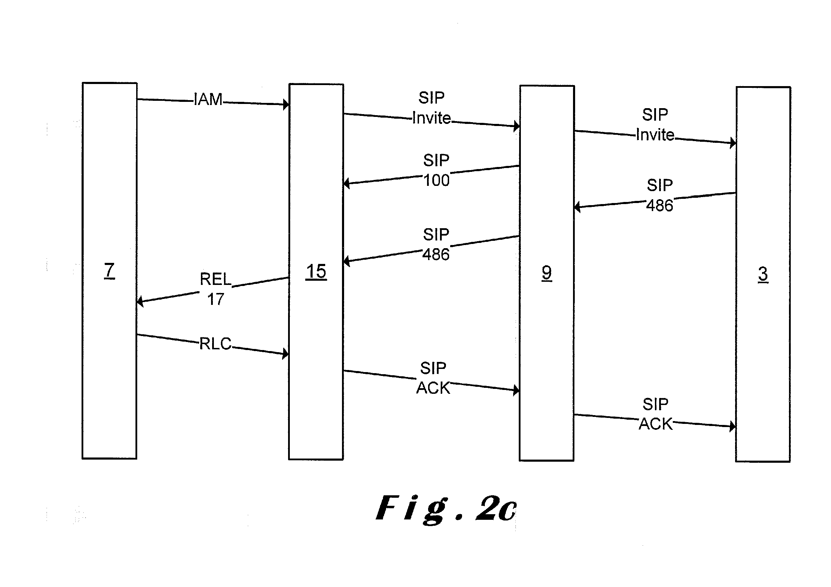

Turning now to the state diagram shown on Fig. 2a, when an incoming call directed at this unique identifier is received over the PSTN 1, the MSC 4 checks whether this unique identifier is registered in the HLR 5 as belonging to a subscriber of this FMC service. If this is the case, the MSC 4 refers the call to the SCP 6, which applies a forced routing routine over the STP 7. The STP 7 sends a connection request in the form of an "IAM" message via the SS7 ISUP signalling channel 16 to the media gateway controller 15, which then interrogates the routing server 9 by sending an SIP "Invite" message. If the dual mode terminal 3 is connected to the IP network 2, its SIP client will have sent a registration message to the routing server 9. If the dual mode terminal 3 is still registered at the routing server 9 when the MGC 15 queries the routing server 9, the routing server 9 will thus transmit the SIP "Invite" message to the dual mode terminal 3, and send an SIP message with code "100" ("Trying") back to the MGC 15. If it is available, the dual mode terminal 3 will then reply to the SIP "Invite" message of the routing server 9 with an SIP message with code "100" ("Trying") first, and then with SIP messages with codes "180" ("Ringing"), "183" ("Media"), and "200" ("OK"). These three are transmitted by the routing server 9 to the MGC 15 as a positive answer to its query. The MGC 15 translates them as "ACM", "CPG", and "ANM" messages to the STP 7 over the SS7 ISUP channel 16, accepting the connection request from the STP 7, and setting up the incoming call 17 to be routed to the dual mode terminal 3 as a VoIP call over the IP network 2, as shown in Fig. 2b. The MGC 15 also sends an SIP "ACK" acknowledgment message to the routing server 9, which will transmit it to the dual mode terminal 3. If the dual mode terminal 3 is busy, as shown in Fig. 2c, it will reply to the SIP "Invite" message of the routing server 9 with an SIP message with code "486" ("Busy"), which will then be transmitted to the MGC 15, which will translate it as an SS7 ISUP message "REL" with release cause code "17" ("Busy") to the STP 7. The STP 7 will then acknowledge the busy signal with an SS7 ISUP "RLC" message towards the MGC 15, which will translate it as an SIP "ACK" message to the dual mode terminal 3 over the routing server 9.

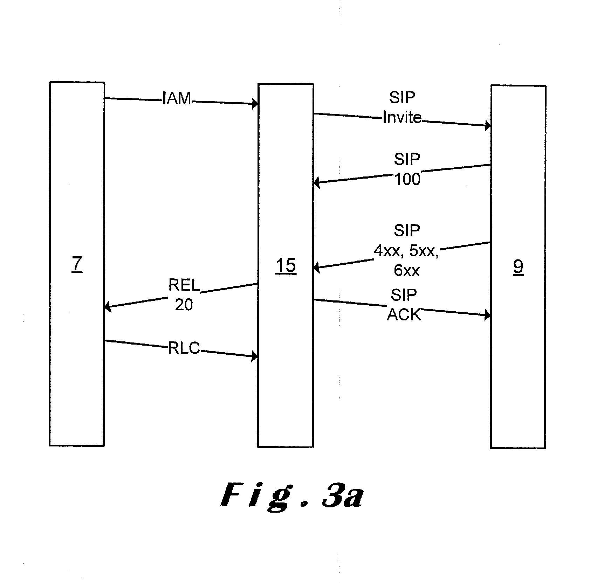

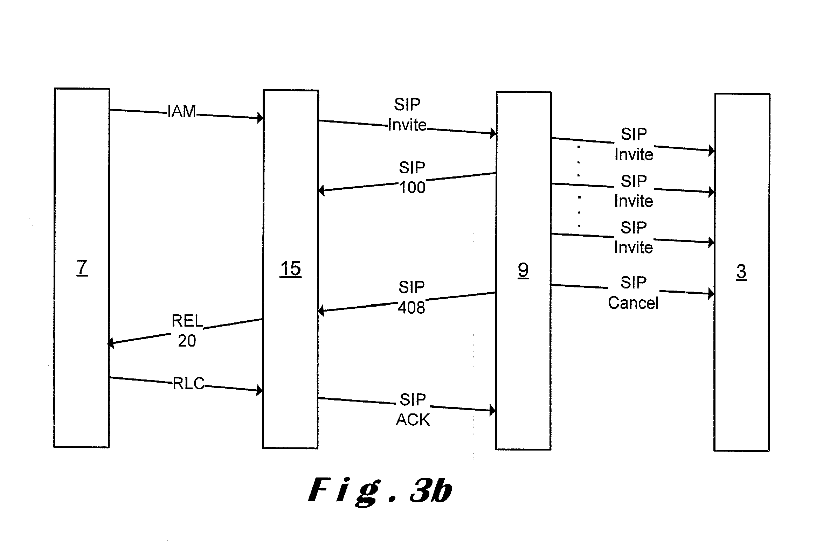

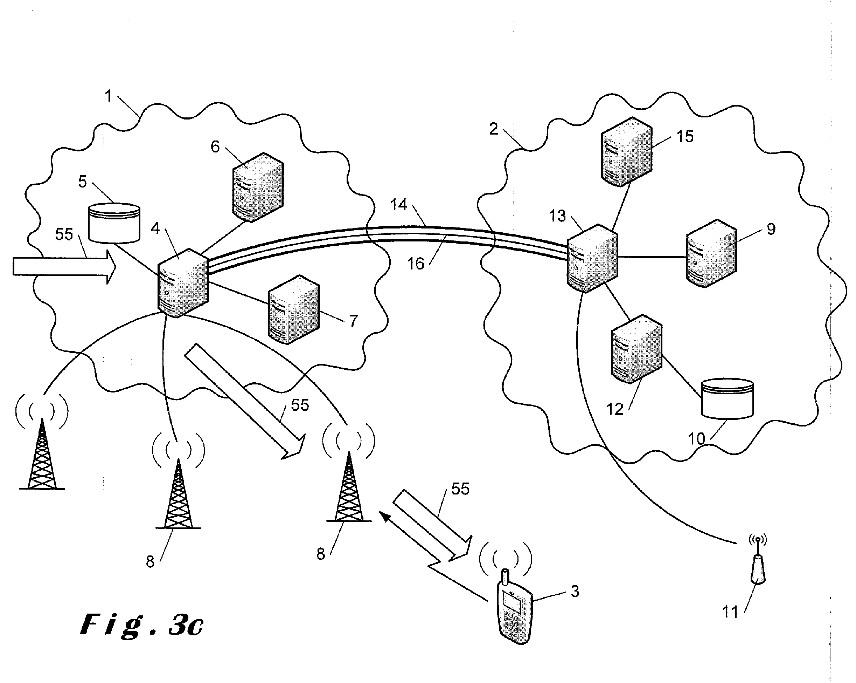

Turning now to Fig. 3a, if the dual mode terminal 3 is not (or no longer) registered at the routing server 9, the routing server 9 will return, after its SIP message with code "100" ("Trying"), a negative answer 18 to the query from the MGC 15 in the form of an SIP message with a failure code in the "4xx" series (other than "486"), in the "5xx" series, or in the "6xx" series. The MGC 15 will then in turn answer the connection request 15 with an SS7 ISUP "REL" message with release cause code "20". The STP 7 will then acknowledge this with an SS7 ISUP "RLC" message towards the MGC 15, which will translate it as an SIP "ACK" message to the routing server 9. In a similar scenario, illustrated on Fig. 3b, the dual mode terminal 3, although connected to the IP network 2, does not reply to repeated SIP "Invite" messages sent by the routing server 9. In this case, after a timeout, the routing server will send an SIP "Cancel" message to the dual mode terminal 3, and an SIP message with code "408" ("Request Timeout") to the MGC 15. As in the previous scenario, the MGC 15 will then answer the connection request 15 with an SS7 ISUP "REL" message with release cause code "20". The STP 7 will then acknowledge this with an SS7 ISUP "RLC" message towards the MGC 15, which will translate it as an SIP "ACK" message to the routing server 9. In both these two scenarios, the call 55 will then be routed to the dual mode terminal 3 over the PSTN 1, without entering the IP network 2, as illustrated in Fig. 3c.

Going back to the example illustrated in Figs. 2a and 2b, once there is an ongoing call 19 over the IP network 2 to the dual mode terminal 3, the dual mode terminal 3 will monitor the connection quality, for instance by monitoring packet losses, wireless signal strength, current jitter and/or jitter buffer size, etc.

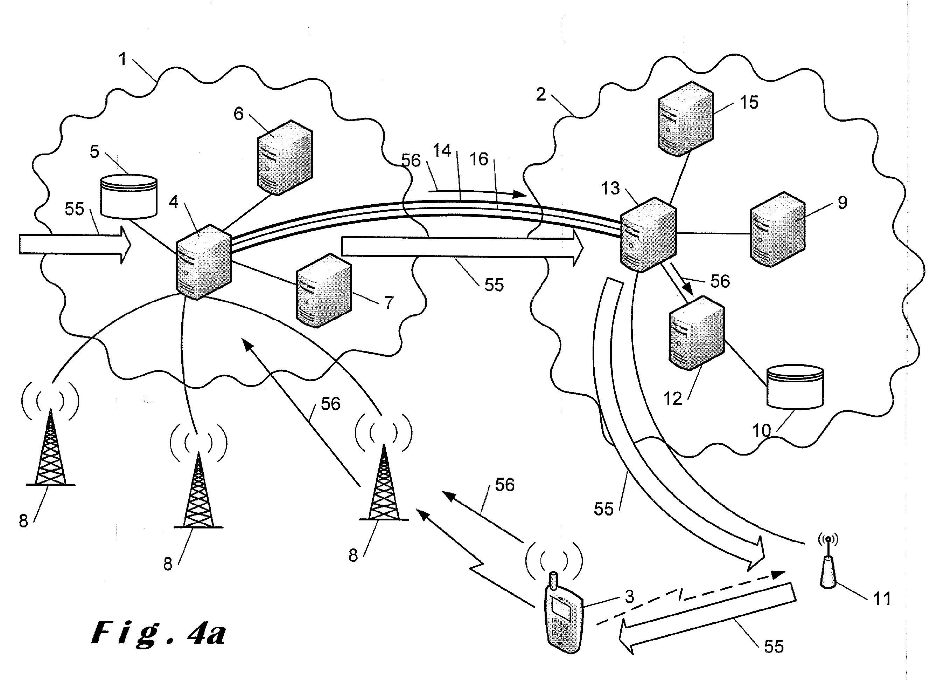

Turning now to Fig. 4a, if the connection of the dual mode terminal 3 with the IP network 2 is significantly impaired, for instance because the dual mode terminal 3 moves towards the outer range of the wireless LAN router 11, the SIP client in the dual mode terminal 3 will initiate a continuity call 56 over a PSTN to the VCC server 12, using a VCC service number.

This VCC service number may be selected from a table of available VCC service numbers, depending on location, which can be determined from global positioning data and/or the MNC and/or MCC of the PLMN base station 8 to which the dual mode terminal 3 is connected. Thus, if this MNC corresponds to that of a "home" PLMN to which the dual mode terminal 3 is subscribed, the selected VCC service number will usually be a specific short number. If however, the MNC and/or MCC does not correspond to that of a "home" PLMN, indicating that the dual mode terminal 3 is connected over a third-party PLMN, the selected VCC service number may be a generic number, possibly a toll-free number which will be routed over another VoIP trunk. The VCC service number may even have a different country prefix, if the MCC also differs from that of the "home" PLMN, indicating that the dual mode terminal 3 is roaming abroad, which makes the selection of a cost-effective VCC service number even more important. Although in the illustrated embodiment the continuity call 56 is routed over the same PSTN 1 that the incoming call 55 originated from, it may thus be routed over a different telephone network, and enter the IP network over a different media gateway.

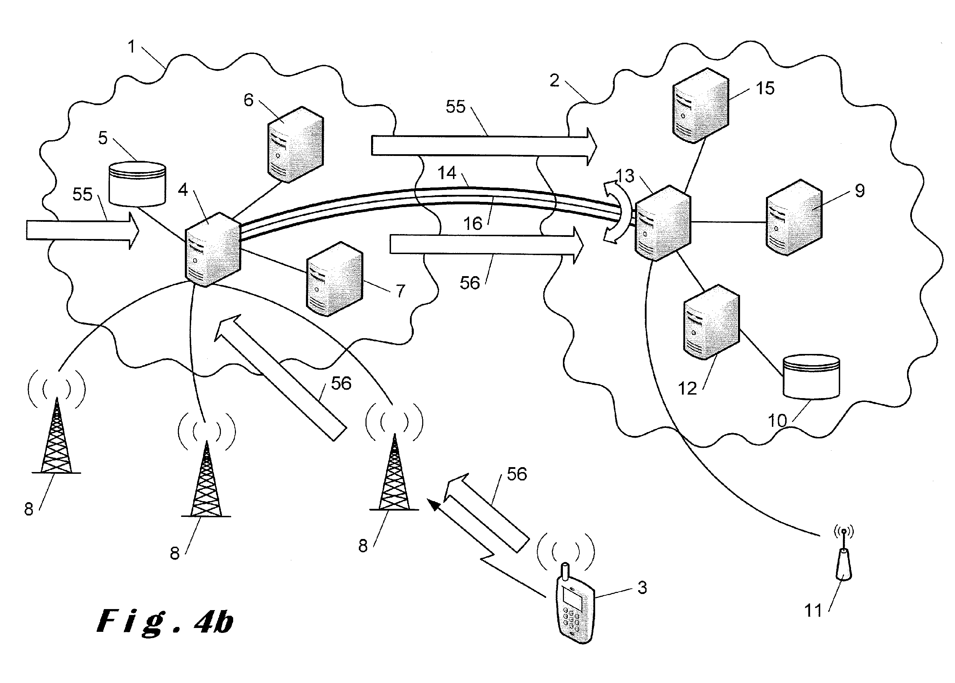

When the VCC server 12 receives a continuity call 56 directed to one such VCC service number and originating from a subscriber dual mode terminal 3, the VCC server 12 will look up in the CPT 10 whether there is an ongoing call 55 with this dual mode terminal over the IP network 2. If the answer is positive, the VCC server 12 will swap the continuity call 56 with the IP network of the ongoing call 55, and then close the IP network leg. As illustrated in Fig. 4b, this will complete handover of the ongoing call 55 from the IP network 2 to the PSTN 1.

While only examples of incoming calls towards the dual mode terminal 3 have been illustrated, it must be understood that the dual mode terminal 3 may itself also initiate outgoing calls, both over its mobile telephony and wireless transceivers. In particular, the call handover illustrated in Figs. 4a and 4b may be performed independently of whether the ongoing call 55 is an incoming or outgoing call. It must also be understood that, while only calls between the dual mode terminal 3 and a PSTN subscriber have been illustrated, the dual mode terminal 3 may also send and receive calls to and from IP network subscribers. Although in this particular embodiment of the invention only a client-originated handover has been described, the handover could eventually also be performed by the VCC server with a continuity call originating from the MGC to the dual-mode terminal as instructed via signalling information emitted by the VCC Server. It must also be understood that, although the media gateway 13 and media gateway controller 15 are illustrated here as two separate entities, they may be combined into a single unit.

It must be also understood that, although the present invention mainly relates to voice calls, other mobile services, such as texting and voicemail, may also be accessible through both the PSTN 1 and the IP network 2.

While the present invention is susceptible of various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents and alternatives falling within the scope of the invention as expressed in the appended claims.

## Claims

1. A communications system comprising:
- a public switched telephone network (1) comprising a signal transfer point (7);
- an Internet Protocol network (2) comprising a media gateway (13) connected to a media gateway controller (15); and
- a dual mode terminal (3) connectable to both said public switched telephone network (1) and said Internet Protocol network (2); and
**characterised in that** said media gateway controller (15) has a signalling point code, and is connected to said signal transfer point (7) over a signalling link.

2. A communications system according to claim 1, wherein said signalling link is an SS7 ISUP signalling channel (16) deployed on a communications trunk (14).

3. A communication system according to any one of the previous claims, wherein said Internet Protocol network (2) further comprises a routing server (9) connected to said media gateway controller (15).

4. A communications system according to any one of the previous claims, wherein said dual mode terminal (3) comprises a mobile telephony transceiver for wirelessly connecting said dual mode terminal (3) to said public switched telephone network (1) over at least one public land mobile network base station (8) connected to said public switched telephone network (1).

5. A communications system according to any one of the previous claims, wherein said dual mode terminal (3) comprises a wireless transceiver for wirelessly connecting said dual mode terminal (3) to said Internet Protocol network (2).

6. A communications system according to any one of the previous claims, wherein said public switched telephone network (1) further comprises a mobile switching center (4).

7. A communications system according to claim 6, wherein said public switched telephone network (1) further comprises a service control point (6), said mobile switching center (4) is configured to direct an incoming call (55) directed to said dual mode terminal to be handled by said service control point (6), and said service control point (6) is configured to signal the call (55) through said first signal transfer point (7).

8. A communications system according to claim 7, wherein said dual mode terminal (3) has a unique identifier, and said public switched telephone network (1) further comprises a home location register (5) listing said unique identifier, and connected to said mobile switching center (4), and said mobile switching center (4) is configured to determine whether an incoming call (55) is directed to said dual mode terminal by checking in said home location register (5).

9. A communications system according to any one of the previous claims, wherein said Internet Protocol network (2) further comprises a voice call continuity server (12) connected to said media gateway (13).

10. A communications system according to claim 9, wherein said dual mode terminal (3) is configured to call the voice call continuity server (12) over a public switched telephone network (1) using a voice call continuity service number if an existing connection to said Internet Protocol network (2) is impaired.

11. A communications system according to claim 10, wherein said dual mode terminal (3) is configured to select said voice call continuity service number from a table of available numbers depending on location of the dual mode terminal (3).

12. A communications system according to any one of claims 9 or 10, wherein said voice call continuity server (12) is configured to check, upon reception of a voice continuity call (56) from said dual mode terminal (3) using said voice call continuity service number, whether there is an ongoing call (55) routed towards said dual mode terminal (3) over said Internet Protocol network (2), and in that case to swap an IP network leg (20a) of the ongoing call (55) with at least one leg of the voice continuity call (56).

13. A method for routing an incoming call (55) in a public switched telephone network (1) towards a dual mode terminal (3) connectable to both said public switched telephone network (1) and an Internet Protocol network (2), comprising the steps of:
- sending a connection request (15) from a signal transfer point (7) located in said public switched telephone network (1) to a media gateway controller (15) located in said Internet Protocol network (2), but identified by a point code;
- if the dual mode terminal (3) is connected to said Internet Protocol network (2), routing the call (55) to the dual mode terminal (3) over said Internet Protocol network (2); and
- if the dual mode terminal (3) is not connected to said Internet Protocol network (2) or does not reply, answering said connection request from the signal transfer point (7) to the media gateway controller (15) with a release message from the media gateway controller (15) to the first signal transfer point (7) and routing the call (55) to the dual mode terminal (3) over said public switched telephone network (1).

14. A method according to claim 13, wherein said connection request and said release message are in the form of SS7 ISUP messages.

15. A method according to any one of claims 13 or 14, further comprising sending a query, from said media gateway controller (15) to a routing server (9) in said Internet Protocol network (2), for determining whether said dual mode terminal (3) is connected to said Internet Protocol network (2).

16. A method according to any one of the previous claims, wherein if, after the incoming call (55) is routed towards the dual mode terminal (3) over the Internet Protocol network (2), the connection of the dual mode terminal (3) to the Internet Protocol network (2) is impaired, the dual mode terminal (3) calls a voice call continuity server (12) in said Internet Protocol network (2) over a public switched telephone network (1) using a voice call continuity service number.

17. A method according to claim 16, wherein said voice call continuity service number is selected from a table of available numbers depending on location of said dual mode terminal (3).

18. A method according to any one of claims 16 or 17, wherein, when the voice call continuity server (12) receives a call (56) originating from the dual mode terminal (3) using a voice call continuity service number, if there is an ongoing call (55) routed over said Internet Protocol network (2) towards said dual mode terminal (3), the ongoing call (55) is rerouted over the public switched telephone network (1).

19. A method according to claim 18, wherein said ongoing call (20) is rerouted over the public switched telephone network (1) by swapping an IP network leg of the ongoing call (55) with at least one leg of the call (56) originating from the dual mode terminal (3) towards the media gateway (13) as instructed via signalling information emitted by the voice call continuity server (12)..
